# EUROPEAN PATENT SPECIFICATION

(11) **EP 2 093 437 B1**
(45) Date of publication and mention of the grant of the patent: **22.05.2013**
(21) Application number: 09153312.5
(22) Date of filing: 20.02.2009
(51) Int. Cl.: F16B 35/04, F16B 37/06, F16B 35/00

(54) **Welding Stud**
Schweißbolzen
Goujon à souder

(30) Priority: 22.02.2008 DE 102008010595
(43) Date of publication of application: 26.08.2009
(73) Proprietor: Newfrey LLC, Newark, Delaware 19711 (US)
(72) Inventor: Pimper, Ralf, 35394 Giessen (DE); Schneider, Joachim, 35394 Giessen (DE); Geist, Joachim, 35394 Giessen (DE); Werner, Wolfgang, 35394 Giessen (DE); Horn, Peter, 71116 Gaertringen (DE)
(74) Representative: Haar, Lucas Heinz Jörn

(56) References cited:
- EP-A2- 1 087 149
- EP-A2- 1 712 326
- US-A- 5 304 022

## Description

The invention relates to a welding stud to be welded using the drawn arc method, in particular for vehicle manufacture.

Welding studs of the specified type are commonly used for automated assembly processes. In these processes, the welded-on stud is populated, for example during final assembly in the vehicle manufacturing process, with nuts or other fasteners to which torque is applied by automated screw driving machines, pneumatic screwdrivers or battery-operated screwdrivers. The nut is often placed incorrectly on the stud. Reasons for this include the short production time available and the spatial conditions in the body shell. These circumstances have the result that the nut or stud does not correctly engage the thread, and cross-threading occurs. This destroys the thread, and the specified ultimate strength of the threaded connection cannot be achieved, necessitating repair, which entails additional costs.

Solutions to this problem have been proposed in the field of screw technology, since automated assembly processes have been known in this field for a very long time. Thus, for example, EP 0 345 373 B1, US 5,073,073, US 4,981,406, US 5,609,455, and EP 0 840 859 B1 provide options for avoiding cross-threading.

EP 0 345 373, US 5,073,073, and US 4,981,406 disclose screws operating on the principle of an eccentric guide tip. The basis of this approach is that the screw can initially be inserted relatively far into the female thread and can immediately be brought into engagement with the correct threads. This is possible because the eccentric or cone shape of the guide tips means that they have a smaller diameter and thus more lateral space is provided. After a few rotations, a secure threaded engagement is achieved and the screwing process can be continued without damaging the threads.

US 5,609,455 shows a screw with a guide tip that initially has no thread at its front end, and further down has a partial thread that then transitions into a full thread. Also in this case, the underlying idea is that the guide tip can be pushed relatively far into the female thread before threaded engagement takes place. Rotating the screw permits further penetration and further alignment of the screw axis in such a way that the angle is signficantly smaller than the pitch angle of the thread. This serves to significantly reduce the risk of cross-threading.

The screw disclosed in EP 1 008 770 A2 uses two different thread profiles that are intended to achieve improved guidance during the screwing-in process. The screw also has an entirely thread-free guide tip. The guide tip transitions into a region having a round thread that is formed in such a way that the round thread engages in the female thread even when the screw is applied obliquely to the female thread. If cross-threading occurs, the engagement of the round thread is not strong enough to destroy the female thread. Instead, the round thread snaps out of the female thread and aligns itself in the correct thread. As the screw rotates further, more threads become engaged, until finally the fully-formed thread at the rear end of the screw is engaged and the ultimate strength of the threaded connection is achieved.

US 5 304 022 A discloses a bolt having a tapered tip comprising of corresponding flat and partially threaded portions that engage an oval nut having elongated internal adjacent sides, the ends of which are void of threads to enable bolt/nut alignment when initially inserted and tightened. Additionally, the tapered threaded bolt has an arcuate shaped or rounded first and/or second thread for providing self-alignment and preventing gouging or digging of internal threads when being inserted or screwed into a conventional nut or oval shaped nut.

EP 1 172 326 A2 discloses a metal welding bolt having a head comprising a weld-on segment and a flange projecting radially beyond the weld-on segment, and having a cylindrical shank provided with an external thread and a washer unreleasably held on the shank between the head and the external thread. The head is molded in one piece onto the shank, whose diameter is less than the diameter of the weld-on segment. The shank comprises a threaded segment having and an unthreaded terminal segment, having a truncated cone taper at the end, facilitating the assembly of parts and fastening elements such as nuts or clamps.

The aforementioned proposed solutions have the disadvantage that they are only suitable for screwing processes in which the screw is arranged more or less movably in a screwdriver. This is the only way it is possible for the screw to align itself after the threads have engaged correctly and for the screwing process to be carried out without damage. This is not possible with welding studs because of the use thereof, since welding studs are rigidly connected to the base material or the base sheet metal, and thus cannot move so as to become aligned.

The object of the invention is to produce a welding stud that is suited to automated and semi-automated screwing processes and that ensures that the threads are engaged with a high level of reliability.

The object is achieved according to the invention by a welding stud with the features specified in claim 1. Advantageous further developments are specified in the dependent claims.

In order to be able to avoid cross-threading in screwing processes that are carried out on welding studs, it is proposed according to the invention for the welding stud to be provided with at least two, preferably four, oblique faces formed on the front end of the welding stud (on the threaded tip). The oblique faces are at an angle of 3°-12°, ideally 6°, and mean that portions of the stud tip remain thread-free during the subsequent thread production processes. Experiments have shown that the best results are achieved when using four oblique faces.

Further, according to the invention the front region of the welding stud is configured so as to taper with at least one tapered diameter gradation. The diameter gradation has the result that the thread in the front region is not fully formed and this assists in the process of thread engagement.

Experiments have shown that oblique nut positions of up to 12° can be compensated for without difficulty by the welding stud configuration according to the invention, and no cross-threading occurs between the stud and female thread. This is achieved due to the fact that, when the nut is positioned obliquely, it wobbles on account of the oblique faces of the stud tip, and thereby comes into correct engagement with the screw or stud thread after a low number of rotations. The invention can be used for both metric and coarse-pitch thread studs.

Welding studs according to the invention reduce the frequency of damage caused by threading errors. It is not necessary to initially position the nuts manually in order to ensure the threads engage correctly. This results in improved workplace ergonomics and enables a smooth workflow to be achieved. Production times are decreased, since significantly more operations can be carried out with automatic screwdriving machines.

The invention is explained in detail below on the basis of embodiments shown in the drawings, in which:
- Fig. 1: shows a welding stud welded onto a base before a nut has been screwed on,
- Fig. 2: shows a pressed blank for the production of a welding stud according to the invention,
- Fig. 3: shows a welding stud with paint scraping grooves according to the invention.

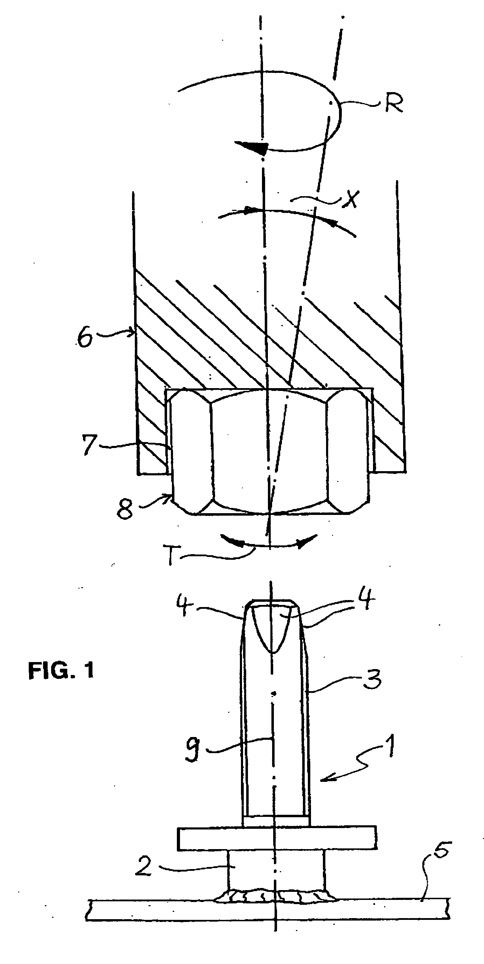

Welding studs are generally used during final assembly in order to fasten functional supports, such as cable harness fasteners, pipe supports, or module carriers. In many cases, this is carried out semi-automatically by means of pneumatic or battery-powered screwdrivers. Fig. 1 shows a screwing tool 6 holding a nut 8 opposite to the front end of a welding stud 1 immediately prior to the screwing process. The welding stud 1 has a shank 3 and a head 2, the head 2 forming a weldable end which is welded to a base 5. Both parts, the welding stud 1 and the base 5 are generally already painted. At its front end, the welding stud 1 has at least two, preferably four, planar oblique faces 4, which are arranged diametrically opposite one another. The oblique faces 4 are inclined by 3° to 12°, but preferably 6°, relative to the stud axis 9.

In semi-automated screwing processes, a person must align the screwing tool 6 with the axis 9 of the welding stud 1 in order to guide the lock nut 8 onto the stud. In general, the alignment cannot be carried out exactly parallel to the stud axis 9, but instead takes place at an angle of application x between the stud axis 9 and the axis of the nut 8. As a result, when using conventional welding studs, there is a risk of cross-threading the threads of the stud and the threads of the nut. This risk is further exacerbated by the fact that the stud is painted, among other factors.

In contrast, in the case of the welding stud 1 according to the invention, the oblique faces 4 at the front end of the stud 1 ensure that the nut 8 executes a slight wobbling motion T when the nut 8 is placed at an angle onto the stud 1 while the screwing tool 6 undergoes rotation R simultaneously. This is made possible, in particular, by the fact that the screwing tool 6 has a certain amount of clearance 7 for motion relative to the flat faces of the nut 8. This ensures that the nut 8 is threaded correctly onto the thread 3 of the stud.

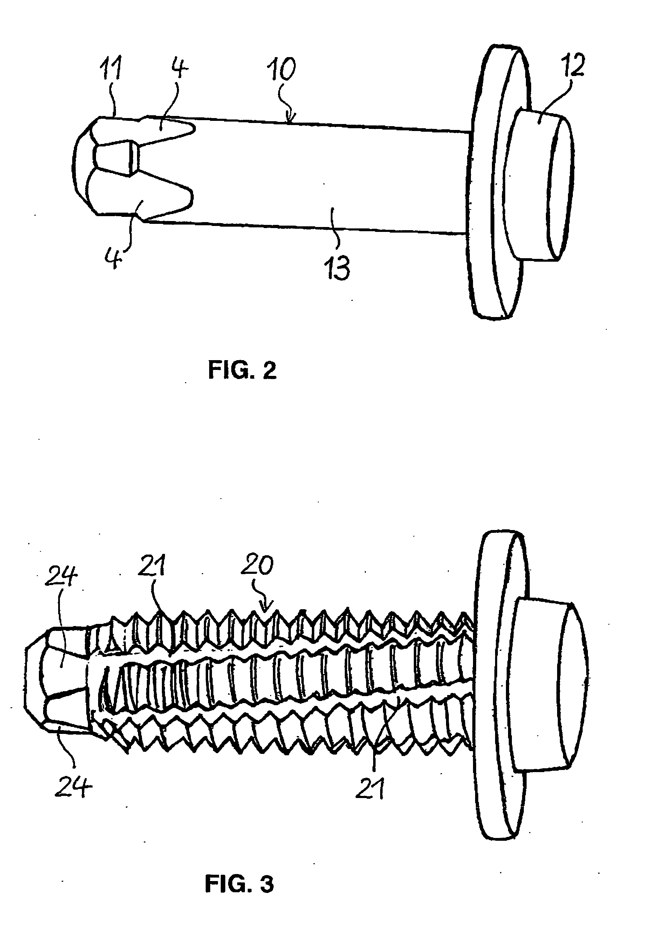

Fig. 2 shows a pressed blank 10 for producing another embodiment of a welding stud. The pressed blank 10 is formed so as to have a head 12 configured as a weldable end and a cylindrical shank 13. The end region of the shank 13 remote from the head 12 is formed so as to have at least two oblique faces 4 which are inclined in such a way that the distance thereof from the stud axis decreases towards the end of the shank. The cylindrical shank 13 has a tapered diameter gradation forming at the front end of the shank 13 a first step 11, which is slightly smaller in diameter than the minor diameter of the thread to be formed later on. This results in incomplete formation of the thread in the front, stepped-down region of the stud, when threads are rolled into the circumferential surface of the shank, e.g. in one pass in a thread rolling machine by means of flat dies. Another embodiment, which is not shown, can have a first and a second step, wherein the first, front step is only slightly smaller than the second step and the second step is slightly smaller than the nominal diameter of the thread. In both these variants, the integrally formed oblique faces 4 ideally extend past the steps.

A further advantageous embodiment of a welding stud 20 is shown in Fig. 3. The welding stud 20 has paint scraping grooves 21, which terminate at the oblique faces 24, so that the scraping action of the grooves 21 does not occur in the region of the thread aligning tip of the stud 20. The paint scraping grooves 21 enable fasteners, such as threaded nuts, to be mounted more easily on the pre-painted welding stud.

## Claims

1. Welding stud (1) comprising a head (2) formed as a weldable end and a shank (3) which has a cylindrical basic shape and is provided with a helical external thread, wherein the end region of the shank (3) remote from the head (2) has at least two oblique faces (4) which are inclined in such a way that the distance thereof from the stud axis (9) decreases towards the end of the shank (3) remote from the head (2), **characterized in that** the end region of the shank (13) remote from the head (12) is formed so as to have at least one tapered diameter gradation (11).

2. Welding stud according to claim 1, **characterized in that** the end region of the shank (3) remote from the head (2) has at least four oblique faces.

3. Welding stud according to either claim 1 or claim 2, **characterized in that** the oblique surfaces (4) are inclined by 2° to 20°, in particular 3° to 12°, preferably 6°, relative to the stud axis (9).

4. Welding stud according to any one of the preceding claims, **characterized in that** the diameter of the diameter gradation (11) is slightly smaller than the minor diameter of the thread.

5. Welding stud according to any one of the preceding claims, **characterized in that** the end of the shank remote from the head has two diameter gradations, the first, front diameter gradation being smaller than the second, and the second diameter gradation being slightly smaller than the nominal diameter of the thread.

6. Welding stud according to any one of the preceding claims, **characterized in that** the shank has at least one paint scraping groove (21) that extends in the longitudinal direction of the shank and at which the threads are interrupted.

7. Welding stud according to claim 6, **characterized in that** the paint scraping groove (21) terminates at an oblique face.

8. Welding stud according to any one of the preceding claims, **characterized in that** the paint scraping groove (21) extends along a helix, the pitch angle of the helix on the outer circumference of the external thread being 70° to 85°, in particular 80°.

9. Method for producing a welding stud according to any one of the preceding claims, **characterized in that** a cylindrical metal stud blank (10) is formed so as to have a head (12) configured as a weldable end and a shank (13), **in that** the end region of the shank (13) remote from the head (12) is formed so as to have at least one tapered diameter gradation (11) and at least two oblique faces (4) which are inclined in such a way that the distance thereof from the stud axis decreases towards the end of the shank (13), and **in that**, finally, threads are rolled into the circumferential surface of the shank (13) in one pass in a thread rolling machine by means of flat dies.

10. Method according to claim 9, **characterized in that** the stud blank (10) is formed so as to have at least one tapered diameter gradation (11) in the end region of the shank (13) remote from the head (12).

11. Method according to any one of claims 9 and 10, **characterized in that** at least one paint scraping groove (21), which extends in the longitudinal direction of the shank and at which the threads are interrupted, is rolled into the circumferential surface of the stud blank.

## Patentansprüche

1. Schweißbolzen (1) mit einem als Anschweißende ausgebildeten Kopf (2) und einem Schaft (3) von zylindrischer Grundform, der mit einem schraubenlinienförmigen Außengewinde versehen ist, wobei der dem Kopf (2) entgegengesetzte Endbereich des Schafts (3) wenigstens zwei Schrägflächen (4) aufweist die eine solche Neigung haben, dass ihr Abstand von der Bolzenachse (9) zum Ende des Schafts hin abnimmt, **dadurch gekennzeichnet dass** der dem Kopf entgegengesetzte Endbereich des Schafts (13) mit wenigstens einer verjüngten Durchmesserabstufung (11) ausgebildet ist

2. Schweißbolzen nach Anspruch 1, **dadurch gekennzeichnet, dass** das dem Kopf (2) entgegengesetzte Endbereich des Schafts (3) wenigstens vier Schrägflächen aufweist.

3. Schweißbolzen nach einem der Ansprüche 1 oder 2, **dadurch gekennzeichnet, dass** die Schrägflächen (4) eine Neigung von 2° bis 20', insbesondere 3° bis 12°, vorzugsweise 6°, gegenüber der Bolzenachse aufweisen.

4. Schweißbolzen nach einem der vorhergehenden Ansprüche, **dadurch gekennzeichnet, dass** der Durchmesser der Durchmesserabstufung (11) geringfügig kleiner ist als der Kerndurchmesser des Gewindes

5. Schweißbolzen nach einem der vorhergehenden Ansprüche **dadurch gekennzeichnet, dass** das dem Kopf entgegengesetzte Ende des Schafts zwei Durchmesserabstufungen aufweist, wobei die erste, vordere Durchmesserabstufung kleiner ist als die zweite und wobei die zweite Durchmesserabstufung geringfügig kleiner ist als der Nenndurchmesser des Gewindes.

6. Schweißbolzen nach einem der vorhergehenden Ansprüche, **dadurch gekennzeichnet, dass** der Schaft wenigstens eine Lackschabenut (21) aufweist, die sich in Längsrichtung des Schaftes erstreckt und an der die Gewindegänge unterbrochen sind.

7. Schweißbolzen nach Anspruch 6, **dadurch gekennzeichnet, dass** die Lackschabenut (21) an einer Schrägfläche endet.

8. Schweißbolzen nach einem der vorhergehenden Ansprüche, **dadurch gekennzeichnet, dass** die Lackschabenut (21) längs einer Schraubenlinie verläuft, wobei der Steigungswinkel der Schraubenlinie am Außenumfang des Außengewindes 70° bis 85°, insbesondere 80°, beträgt.

9. Verfahren zur Herstellung eines Schweißbolzens nach einem der vorhergehenden Ansprüche, **dadurch gekennzeichnet dass** ein zylindrischer Metallbolzenrohling (10) mit einem als Anschweißende ausgebildeten Kopf (12) und einem Schaft (13) geformt wird, dass der dem Kopf (12) entgegengesetzte Endbereich des Schafts (13) mit wenigstens einer verjüngten Durchmesserabstufung (11) und wenigstens zwei Schrägflächen (4) ausgebildet wird, die eine solche Neigung haben, dass ihr Abstand von der Bolzenachse zum Ende des Schafts (13) hin abnimmt und dass anschließend in einer Gewindewalzmaschine in einem Durchgang mittels Flachbacken Gewindegänge in die Mantelfläche des Schafts (13) gewalzt werden.

10. Verfahren nach Anspruch 9, **dadurch gekennzeichnet, dass** der Bolzenrohling (10) an dem dem Kopf (12) entgegengesetzte Endbereich des Schafts (13) mit wenigstens einer verjüngten Durchmesserabstufung (11) ausgebildet wird.

11. Verfahren nach einem der Ansprüche 9 oder 10, **dadurch gekennzeichnet, dass** wenigstens eine Lackschabenut (21), die sich in Längsrichtung des Schaftes erstreckt und an der die Gewindegänge unterbrochen sind, in die Mantelfläche des Bolzenrohlings gewalzt wird.

## Revendications

1. Goujon à souder (1) comprenant une tête (2) formée en tant qu'extrémité soudable et une tige (3) qui présente une forme de base cylindrique et est dotée d'un filet extérieur hélicoïdal, dans lequel la région d'extrémité de la tige (3) distante de la tête (2) présente au moins deux faces obliques (4) qui sont inclinées de telle sorte que leur distance à partir de l'axe du goujon (9) diminue vers l'extrémité de la tige (3) distante de la tête (2), **caractérisé en ce que** la région d'extrémité de la tige (13) distante de la tête (12) est formée de façon à présenter au moins une gradation de diamètre diminuée (11).

2. Goujon à souder selon la revendication 1, **caractérisé en ce que** la région d'extrémité de la tige (3) distante de la tête (2) présente au moins quatre faces obliques.

3. Goujon à souder selon soit la revendication 1 soit la revendication 2, **caractérisé en ce que** les surfaces obliques (4) sont inclinés d'entre 2° et 20°, en particulier d'entre 3° et 12°, de préférence de 6°, par rapport à l'axe du goujon (9).

4. Goujon à souder selon l'une quelconque des revendications précédentes, **caractérisé en ce que** le diamètre de la gradation de diamètre (11) est légèrement plus petit que le diamètre intérieur du filet.

5. Goujon à souder selon l'une quelconque des revendications précédentes, **caractérisé en ce que** l'extrémité de la tige distante de la tête présente deux gradations de diamètre, la première, la gradation de diamètre avant étant plus petite que la seconde, et la seconde gradation de diamètre étant légèrement plus petite que le diamètre nominal du filet.

6. Goujon à souder selon l'une quelconque des revendications précédentes, **caractérisé en ce que** la tige présente au moins une rainure de grattage de la peinture (21) qui s'étend dans la direction longitudinale de la tige et au niveau de laquelle les filets sont interrompus.

7. Goujon à souder selon la revendication 6, **caractérisé en ce que** la rainure de grattage de la peinture (21) se termine au niveau d'une face oblique.

8. Goujon à souder selon l'une quelconque des revendications précédentes, **caractérisé en ce que** la rainure de grattage de la peinture (21) s'étend le long d'une hélice, l'angle de calage de l'hélice sur la circonférence extérieure du filet extérieur se situant entre 70° et 85°, en particulier à 80°.

9. Procédé destiné à fabriquer un goujon à souder selon l'une quelconque des revendications précédentes, **caractérisé en ce qu'**un flan de goujon métallique cylindrique (10) est formé de façon à présenter une tête (12) configurée en tant qu'extrémité soudable et une tige (13), **en ce que** la région d'extrémité de la tige (13) distante de la tête (12) est formée de façon à présenter au moins une gradation de diamètre diminuée (11) et au moins deux faces obliques (4) qui sont inclinées de telle sorte que leur distance à partir de l'axe du goujon diminue vers l'extrémité de la tige (13), et **en ce que**, pour finir, des filets sont enroulés dans la surface circonférentielle de la tige (13) en une passe dans une machine à rouler les filets au moyen de matrices plates.

10. Procédé selon la revendication 9, **caractérisé en ce que** le flan de goujon (10) est formé de façon à présenter au moins une gradation de diamètre diminuée (11) dans la région d'extrémité de la tige (13) distante de la tête (12).

11. Procédé selon l'une quelconque des revendications 9 et 10, **caractérisé en ce qu'**au moins une rainure de grattage de la peinture (21), qui s'étend dans la direction longitudinale de la tige et au niveau de laquelle les filets sont interrompus, est enroulée dans la surface circonférentielle du flan de goujon.
